(19) Europäisches Patentamt / European Patent Office / Office européen des brevets

(11) **EP 2 451 093 A1**

(12) **EUROPEAN PATENT APPLICATION**
published in accordance with Art. 153(4) EPC

(43) Date of publication:
**09.05.2012 Bulletin 2012/19**

(51) Int Cl.:
*H04B 10/04* (2006.01)  *G02F 1/03* (2006.01)
*H04B 10/02* (2006.01)  *H04B 10/06* (2006.01)
*H04B 10/14* (2006.01)  *H04B 10/142* (2006.01)
*H04B 10/152* (2006.01)  *H04B 10/18* (2006.01)
*H04B 10/26* (2006.01)  *H04B 10/28* (2006.01)

(21) Application number: **10793885.4**

(22) Date of filing: **08.03.2010**

(86) International application number:
**PCT/JP2010/053804**

(87) International publication number:
**WO 2011/001714 (06.01.2011 Gazette 2011/01)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **01.07.2009 JP 2009156841**

(71) Applicant: **Mitsubishi Electric Corporation Tokyo 100-8310 (JP)**

(72) Inventors:
• **SAWADA, Kazushige Tokyo 100-8310 (JP)**

• **SUGIHARA, Takashi Tokyo 100-8310 (JP)**
• **SHIMAKURA, Yasuhisa Tokyo 100-8310 (JP)**
• **SUGIHARA, Kohei Tokyo 100-8310 (JP)**

(74) Representative: **Pfenning, Meinig & Partner GbR Patent- und Rechtsanwälte Theresienhöhe 13 80339 München (DE)**

(54) **OPTICAL TRANSMISSION DEVICE AND OPTICAL TRANSMISSION METHOD**

(57) An object is to provide an optical transmission apparatus in which, even if a change is made in the bit rate of modulation signals that are inputted to a plurality of optical modulating units, the modulation signals do not suffer from phase shifting, thereby enabling achieving synchronous modulation in the plurality of optical modulating units and enabling achieving a high optical signal quality.

An optical transmission apparatus comprises: a plurality of optical modulating units that modulate light on the basis of modulation signals; and a delay amount control unit that, based on bit rate information indicating a bit rate of the modulation signals, controls delay amounts of the modulation signals to be inputted to the plurality of optical modulating units, in such a way that the light is modulated in a synchronous manner in the plurality of optical modulating units.

FIG.1

EP 2 451 093 A1

**Description**

Field

The present invention relates to an optical communication technology, and particularly relates to an optical transmission apparatus including a plurality of optical modulating units and to an optical transmission method.

Background

Among conventional optical transmission apparatuses including a plurality of optical modulating sections, there is known an optical transmission apparatus in which delay amounts of delay amount varying sections for adjusting timing between drive signals to be provided for the optical modulating sections are controlled based on a monitored temperature, so that it becomes possible to compensate any shift in delays that may occur among the drive signals due to temperature fluctuation (for example, Patent Literature 1).

Citation List

Patent Literature

Patent Literature 1: Japanese Patent Application Laid-open No. 2007-158415.

Summary

Technical Problem

In the conventional optical transmission apparatus disclosed in Patent Literature 1, generally, there is a problem as follows. The lengths of wiring lines provided from the delay amount varying sections to the optical modulating sections can not necessarily be made equal to each other. Hence, if a change is made in the bit rate of modulation signals included in the drive signals, then phase shift is caused among the modulation signals in the optical modulating sections since delay differences among the modulation signals at the changed bit rate are not optimized. Therefore, modulation in the plurality of optical modulating sections is not performed in a synchronous manner, thereby leading to the potential for deterioration in the optical signal quality.

The present invention has been made in order to resolve the problem as mentioned above, and it is an object of the present invention to provide an optical transmission apparatus in which, even if a change is made in the bit rate of the modulation signals that are fed to the plurality of optical modulating sections, the modulation signals do not suffer from phase shifting thereamong, thereby enabling achieving synchronous modulation in the plurality of optical modulating sections and enabling achieving a high optical signal quality.

Solution to Problem

An optical transmission apparatus according to the present invention comprises: a plurality of optical modulating units that modulate light on the basis of modulation signals; and a delay amount control unit that, based on bit rate information indicating a bit rate of the modulation signals, controls delay amounts of the modulation signals to be inputted to the plurality of optical modulating units, in such a way that the light is modulated in a synchronous manner in the plurality of optical modulating units.

Advantageous Effects of Invention

According to an aspect of the present invention, in an optical transmission apparatus, even if a change is made in the bit rate of modulation signals that are fed to a plurality of optical modulating units, the modulation signals do not suffer from phase shifting thereamong, thereby enabling achieving synchronous modulation in the plurality of optical modulating units and enabling achieving a high optical signal quality.

Brief Description of Drawings

FIG. 1 is a configuration diagram of an optical transmission apparatus according to a first embodiment of the present invention.

FIG. 2 is an explanatory diagram for explaining an optical transmission apparatus according to a second embodiment of the present invention.

FIG. 3 is an explanatory diagram for explaining an optical transmission apparatus according to a third embodiment of the present invention.

Description of Embodiments

First embodiment.

An optical transmission apparatus according to a first embodiment of the present invention comprises: a plurality of optical modulating units that let light pass therethrough in tandem and modulate the light based on modulation signals; a delay amount control unit that, based on temperature information indicating the temperature of a light propagating portion and bit rate information, controls delay amounts of the modulation signals to be provided to the plurality of optical modulating units, in such a way that the light is modulated in a synchronous manner in the plurality of optical modulating units; and a bias control unit that controls bias voltages to be applied to the plurality of optical modulating units in such a way that the plurality of optical modulating units operate at predetermined operating points. With that, even if a change is made in the bit rate of the modulation signals that are fed to the plurality of optical modulating units, the modulation signals do not suffer from phase shifting thereamong and the light is modulated in a synchronous manner in the plurality of optical modulating units. Moreover, the bias voltage control of the optical modulating units does not deviate from an optimum operating points thereby enabling achieving a high optical signal quality.

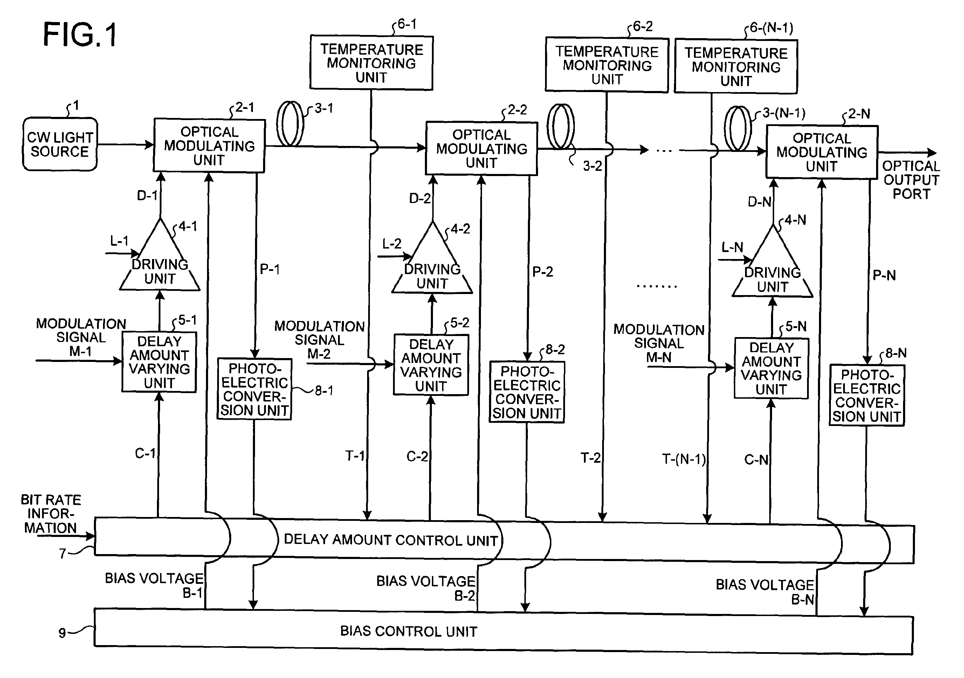

FIG. 1 is a configuration diagram of the optical transmission apparatus according to the first embodiment of the present invention. It is, in the drawings, noted that the same or equivalent constituent elements are referred to by the same reference numerals. In FIG. 1, the reference numeral 1 represents a CW (Continuous Wave) light source; the reference numerals 2-1 to 2-N (where, N is a natural number equal to or greater than 2) represent optical modulating units serving as a plurality of optical modulating units; the reference numerals 3-1 to 3-(N-1) represent optical fibers serving as light propagating portions; the reference numerals 4-1 to 4-N represent driving units; the reference numerals 5-1 to 5-N represent delay amount varying units; the reference numerals 6-1 to 6-(N-1) represent temperature monitoring units; the reference numeral 7 represents a delay amount control unit; the reference numerals 8-1 to 8-N represent photoelectric conversion units, and the reference numeral 9 represents a bias control unit.

In FIG. 1, the optical modulating units 2-1 to 2-N are disposed in between the CW light source 1 and an optical output port of the optical transmission apparatus. The optical modulating units 2-1 to 2-N are optically-connected in such a way that the optical modulating units 2-1 to 2-N let the light pass therethrough in tandem via the optical fibers 3-1 to 3-(N-1), respectively. Such a multistage connection configuration of external optical modulators is used in, for example, the (CS) RZ-DPSK ((Carrier-Suppressed) Return-to-Zero - Differentiated Phase Shift Keying) modulation system or the (CS) RZ-OOK ((Carrier-Suppressed) Return-to-Zero - On/Off Keying) modulation system. As far as the optical modulating units 2-1 to 2-N are concerned, for example, Mach-Zehnder optical modulators that are formed of $LiNbo_3$ substrates are used. As the CW light source 1, a wavelength-tunable laser can be used. Meanwhile, the optical modulating units 2-1 to 2-N, the driving units 4-1 to 4-N, the delay amount varying units 5-1 to 5-N, the temperature monitoring units 6-1 to 6-(N-1), the delay amount control unit 7, the photoelectric conversion units 8-1 to 8-N, and the bias control unit 9 are electrically connected as illustrated in FIG. 1.

Given below is the explanation regarding operations. In FIG. 1, the CW light source 1 outputs CW light having the wavelength of, for example, 1.55 $\mu$m. The outputted CW light then passes through the optical modulating units 2-1 to 2-N and gets subjected to optical modulation in each of the optical modulating units 2-1 to 2-N. The optically modulated CW light is then outputted from the optical output port to the outside of the optical transmission apparatus.

The optical modulating units 2-1 to 2-N have driving signal input terminals that are electrically connected to the driving units 4-1 to 4-N, respectively. Modulation signals M-1 to M-N that represent a sort of data from a user interface (not illustrated) are respectively inputted to the driving units 4-1 to 4-N via the delay amount varying units 5-1 to 5-N. Then, the driving units 4-1 to 4-N respectively generate driving signals D-1 to D-N including the modulation signals M-1 to M-N, respectively, and output the driving signals D-1 to D-N to the driving signal input terminals of the optical modulating units 2-1 to 2-N, respectively. Based on the modulation signals M-1 to M-N included in the driving signals D-1 to D-N from the driving signal input terminals, the optical modulating units 2-1 to 2-N perform optical modulation such as optical intensity modulation or optical phase modulation on the CW light. Meanwhile, the modulation signals M-1 to M-N represent, for example, Ethernet (registered trademark) data having a bit rate of 10.3 Giga-bit/s or represent a clock or the like of a frequency corresponding to the data.

Each of the optical modulating units 2-1 to 2-N includes a monitor port that monitors the optical output for performing bias voltage control, and a bias voltage input terminal to which a bias voltage is applied. Light signals P-1 to P-N outputted from the monitor ports are converted into electrical signals by the photoelectric conversion units 8-1 to 8-N, respectively, and the electrical signals are inputted to the bias control unit 9. Based on the electrical signals inputted thereto, the bias control unit 9 controls bias voltages B-1 to B-N applied to the bias voltage input terminals of the optical modulating units 2-1 to 2-N, respectively.

More specifically, along with the changes with the passage of time or the changes in temperature, the optical modulating units 2-1 to 2-N have a characteristic of drifting the applied bias voltages in an increasing direction or a decreasing direction in an operating characteristic curve which represents a relationship between an optical output and an applied bias voltage. In order to compensate the drifts and to optimize the operating points with respect to the applied bias voltages, low-frequency signals L-1 to L-N are inputted to the driving units 4-1 to 4-N from a low-frequency signal source (not illustrated), and are superimposed on the driving signals D-1 to D-N. Meanwhile, alternatively, the low-frequency signals L-1 to L-N may also be superimposed on the bias voltages B-1 to B-N applied to the bias voltage input terminals of the optical modulating units 2-1 to 2-N. Then, from the monitor ports of the optical modulating units 2-1 to 2-N, the light signals P-1 to P-N including low-frequency components corresponding to the low-frequency signals L-1 to L-N. Based on the synchronous detection of the superimposed low-frequency signals and the electrical signals obtained by the conversion of the light signals P-1 to P-N from the monitor ports, the bias control unit 9 adjusts the bias voltages B-1 to B-N, respectively, so as to perform control to keep the operating points of the optical modulating units 2-1 to 2-N in optimal conditions. As a result, despite the changes with the passage of time or the changes in temperature, the bias voltage control of the optical modulating units 2-1 to 2-N does not deviate from the optimum operating points, thereby to make it possible to achieve a high optical signal quality.

The temperature monitoring units 6-1 to 6-(N-1) are thermally connected to the optical fibers 3-1 to 3-(N-1) connecting between the optical modulating units 2-1 to 2-N, monitor the temperatures of the optical fibers 3-1 to 3-(N-1), and output temperature monitoring signals T-1 to T-(N-1) indicating the monitored temperatures to the delay amount control unit 7.

Based on the temperature monitoring signals T-1 to T-(N-1) from the temperature monitoring units 6-1 to 6-(N-1) and bit rate information from the outside of the apparatus, based on, for example, a monitoring and control system (not illustrated), the delay amount control unit 7 calculates delay amounts of the delay amount varying units 5-1 to 5-N and outputs control signals C-1 to C-N indicating the calculated delay amounts in such a way that the phase differences among the modulation signals M-1 to M-N included in the driving signals D-1 to D-N inputted to the optical modulating units 2-1 to 2-N are maintained at predetermined constant values without depending on changes in the temperature or changes in the bit rate information. The delay amount varying units 5-1 to 5-N assign the variable delay amounts, which are based on the control signals C-1 to C-N from the delay amount control unit 7, to the modulation signals M-1 to M-N, and outputs the resultant signals to the driving units 4-1 to 4-N. With that, temperature compensation and bit rate compensation is carried out for the phase shifts occurring among the modulation signals M-1 to M-N included in the driving signals D-1 to D-N.

Explained below in details are the operations performed by the delay amount control unit 7 to calculate the delay amounts. Firstly, concerning temperature compensation, the delay amount control unit 7 retains temperature characteristic data that are the data regarding temperature dependency of the delay amounts of the optical fibers 3-1 to 3-(N-1). Then, based on the temperature characteristic data of the delay amounts and the information about temperatures monitored by the temperature monitoring units 6-1 to 6-(N-1), the delay amount control unit 7 calculates correction values for the delay amounts of the delay amount varying units 5-1 to 5-(N-1), respectively, which are used to compensate delay differences among the modulation signals M-1 to M-N, that are caused by temperature fluctuation in the delay amounts in the optical fibers 3-1 to 3-(N-1).

Moreover, concerning bit rate compensation, the delay amount control unit 7 retains information on the lengths of transmission paths between the delay amount varying units 5-1 to 5-N and the driving units 4-1 to 4-N, information on the lengths of transmission paths between the driving units 4-1 to 4-N and the optical modulating units 2-1 to 2-N, and information on the delay amount per unit length of a transmission path. With that, it also becomes possible to calculate information on the total delay amount corresponding to the total length of the transmission paths. Based on these kinds of retained information and information on the delay amount of one period of the bit rate, the delay amount control unit 7 calculates the phases at which the modulation signals M-1 to M-N are inputted to the optical modulating units 2-1 to 2-N.

For example, assume that L [mm] represents the total length of transmission paths calculated as the sum of the transmission path length from the delay amount varying unit 5-1 to the driving unit 4-1 and the transmission path length from the driving unit 4-1 to the optical modulating unit 2-1; X [ps/mm] represents the delay amount per unit length of the transmission path; and A1 [ps/period] represents the delay amount per period of the bit rate of 10.3 Giga-bit/s. Then, Equation (1) given below is satisfied.

$$(L \times X)/A1 = 2\pi k + \theta_{A1}, \text{ where } (0 \leq \theta_{A1} < 2\pi), \text{ k: natural number} \qquad (1)$$

Using Equation (1), it is possible to calculate an input phase $\theta_{A1}$ for the optical modulating unit 2-1 in this bit rate. Then, for example, when the bit rate is changed from 10.3 Giga-bit/s to 9.95 Giga-bit/s of SDH (Synchronous Digital Hierarchy), if it is assumed that A2 [ps/period] represents the delay amount per period of the changed bit rate, then the optical modulating unit 2-1 has an input phase $\theta_{A2}$. At this time, the difference $\Delta\theta=\theta_{A1}-\theta_{A2}$ becomes the correction amount for the delay amount to be used for the modulation signal M-1 in the changed bit rate. For the optical modulating units 2-2 to 2-N, the delay amount control unit 7 uses an equation identical to Equation (1) to calculate the correction amounts for the delay amounts to be used for the modulation signals M-2 to M-N in the changed bit rate.

In this way, the delay amount control unit 7 outputs to the delay amount varying units 5-1 to 5-N, respectively, the control signals C-1 to C-N, which indicate the calculation result of delay amounts as the addition result of calculated values of delay amounts corresponding to the temperatures of the optical fibers 3-1 to 3-(N-1) and calculated values of correction amounts for the delay amounts in the changed bit rate, thereby to control the delay amounts assigned to the modulation signals M-2 to M-N in the delay amount varying units 5-1 to 5-N in accordance with the control signals C-1 to C-N. As a result, the modulation signals M-1 to M-N included in the driving signals D-1 to D-N inputted to the optical modulating units 2-1 to 2-N via the driving units 4-1 to 4-N are subjected to a constant timing control irrespective of temperature fluctuation or changes in the bit rate. Hence, it becomes possible to prevent signal degradation resulting from the temperature dependency of the delay amounts of the optical fibers 3-1 to 3-(N-1) and signal degradation resulting from shifts in the input phases for the optical modulating units 2-1 to 2-N caused by the bit rate change. As a result, a high quality optical transmission apparatus can be achieved.

As described above, the optical transmission apparatus according to the first embodiment of the present invention comprises: the optical modulating units 2-1 to 2-N serving as a plurality of optical modulating units that let the CW light from the CW light source 1 pass therethrough in tandem and modulate the light based on the modulation signals M-1 to M-N; the delay amount control unit 7 that, based on the temperature information indicating temperatures of the optical fibers 3-1 to 3-(N-1) representing light propagation portions, monitored by the temperature monitoring units 6-1 to 6-(N-1) and the bit rate information of the modulation signals M-1 to M-N, controls the delay amounts of the modulation signals M-1 to M-N to be inputted to the optical modulating units 2-1 to 2-N via the delay amount varying units 5-1 to 5-N and the driving units 4-1 to 4-N in such a way that the light is modulated in a synchronous manner in the optical modulating units 2-1 to 2-N; and the bias control unit 9 that, based on the optical outputs of the optical modulating units 2-1 to 2-N monitored via the photoelectric conversion units 8-1 to 8-N, controls the bias voltages applied to the optical modulating units 2-1 to 2-N in such a way that the optical modulating units 2-1 to 2-N operate at predetermined operating points. With that, even if the bit rate of the modulation signals M-1 to M-N is changed, the modulation signals M-1 to M-N, which are inputted to the optical modulating units 2-1 to 2-N, do not suffer from phase shifting and the light is modulated in a synchronous manner in the optical modulating units 2-1 to 2-N. Moreover, the bias voltage controls of the optical modulating units 2-1 to 2-N do not deviate from the optimum operating points thereby enabling achieving a high optical signal quality.

Meanwhile, as described above, in the optical transmission apparatus according to the first embodiment of the present invention, the configuration is such that the optical modulating units 2-1 to 2-N are arranged to let the light pass therethrough in tandem and thereby modulate the light. However, the invention is not limited to this configuration, and alternatively, the configuration may be such that, for example, the arrangement is to let the light pass in parallel and thereby modulate the light or to let the light pass in a combination form of tandem and parallel and thereby modulate the light. To sum up, as long as it is preferable to modulate the light in synchronization in the plurality of optical modulating units, then a configuration having any type of arrangement offers the same action and effect. For example, in the DQPSK (Differential Quadrature Phase Shift Keying) modulation system, the configuration has two Mach-Zehnder optical modulators connected in parallel. In that case too, the same action and effect is achieved.

Second embodiment.

In a second embodiment of the present invention, the optical transmission apparatus has the same configuration as that of the optical transmission apparatus according to the first embodiment of the present invention. However, at the time of an operation changeover for the switching of the wavelength of the light, the bias control unit resets the bias voltages applied to the plurality of optical modulating units to an initial value and, after the resetting, controls the bias voltages applied to the plurality of optical modulating units in the order of letting the light pass in tandem. As a result, even at the time of an operation changeover for the switching of the wavelength of the light, the bias voltage control of the optical modulating units does not deviate from the optimum operating points thereby enabling achieving a high optical signal quality.

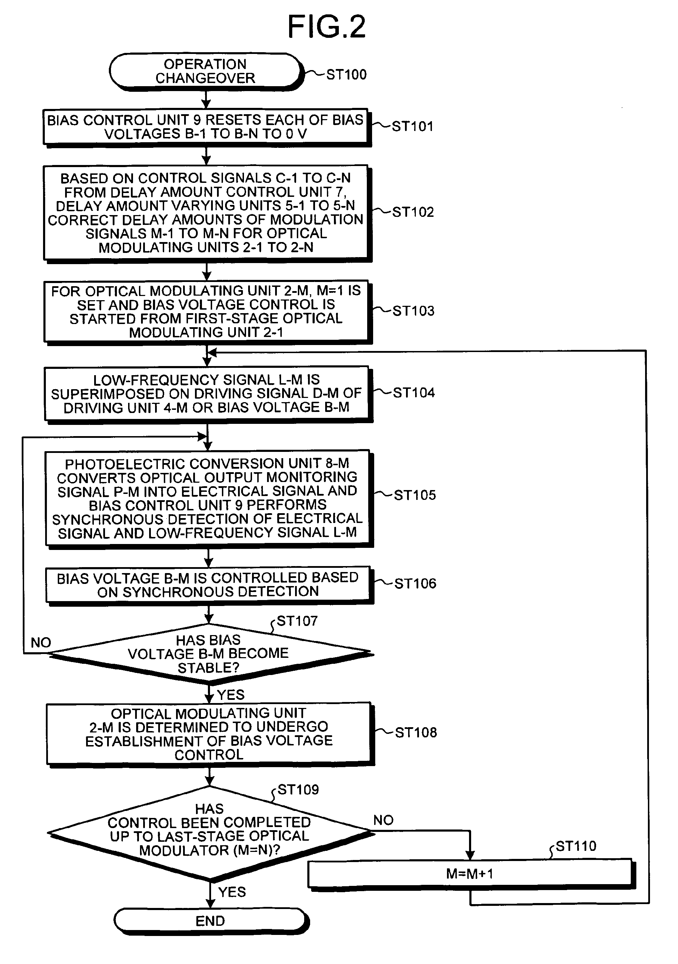

FIG. 2 is an explanatory diagram for explaining the optical transmission apparatus according to the second embodiment of the present invention, and is a flowchart for showing the sequence for performing the bias voltage control of the optical modulating units 2-1 to 2-N that are connected in a multistage manner in an equivalent configuration to the configuration of the optical transmission apparatus illustrated in FIG. 1. Meanwhile, in the drawings, the same or equivalent constituent elements are referred to by the same reference numerals.

In the optical transmission apparatus according to the second embodiment of the present invention, at the time of performing an operation changeover, the bias control unit 9 resets the bias voltages of the optical modulating units 2-1 to 2-N to an initial value and then performs the bias voltage control all over again. For example, for an operation changeover, if the wavelength of 1.55 μm of the CW light source 1 serving as a wavelength-tunable light source is changed, then the optical output of the CW light source 1 decreases once and the CW light is outputted after a desired wavelength of, for example, 1.54 μm is set.

In FIG. 2, at the time of performing an operation changeover (Step ST100), firstly, the bias control unit 9 resets each of the bias voltages B-1 to B-N to 0 V (Step ST101). Then, based on the control signals C-1 to C-N from the delay amount control unit 7, the delay amount varying units 5-1 to 5-N correct the delay amounts for the modulation signals M-1 to M-N to be inputted to the optical modulating units 2-1 to 2-N, respectively (Step ST102).

Subsequently, for an optical modulating unit 2-M, M=1 is set and the bias voltage control is started from the first-stage optical modulating unit 2-1 (Step ST103). Firstly, a low-frequency signal L-M (M=1) is superimposed on a driving signal D-M (M=1) of a driving unit 4-M (M=1) or on a bias voltage B-M (M=1) (Step ST104). Then, a photoelectric conversion unit 8-M (M=1) converts an optical output monitoring signal P-M (M=1) into an electrical signal, and the bias control unit 9 performs synchronous detection of the electrical signal and the low-frequency signal L-M (M=1) (Step ST105). The bias voltage B-M (M=1) is controlled based on the synchronous detection (Step ST106). Subsequently, it is determined whether or not the bias voltage B-M (M=1) has become stable (Step ST107).

The voltage stability is determined, for example, on the basis of whether or not the bias voltage B-M (M=1) that is controlled by synchronous detection remains within a predetermined voltage range for a certain period of time. At the time of starting the bias voltage control, the bias voltage B-M (M=1) is reset to 0 V. If the operating optimum point of the optical modulating unit 2-M (M=1) is very far away from 0 V, then the bias voltage control causes the bias voltage B-M (M=1) to be greatly changed up to the optimum point. Hence, the bias voltage B-M (M=1) undergoes a large change in a short period of time. At this time, the control is not yet stable ("No" at Step ST107). Thus, on a continuous basis, the synchronous detection is performed (Step ST105), and the bias voltage B-M (M=1) is controlled (Step ST106) and monitored over a certain period of time. When the bias voltage B-M (M=1) becomes stable ("Yes" at Step ST107), it is determined that the bias voltage control has been established for the first-stage optical modulating unit 2-M (M=1) (Step ST108).

Once the optical modulating unit 2-1 becomes stable, the process is shifted to the control of the bias voltage B-2 for the next-stage optical modulating unit 2-2 to which the stable light is inputted. Then, for example, when M=N is false and the control has not been completed for the last-stage optical modulator ("No" at Step ST109), M=2 is set by calculation of M=M+1 (Step ST110) and the bias control is started for the next-stage optical modulating unit 2-M (M=2). In this way, the operations from Step ST104 to Step ST109 are repeated until M=N is true and the control is completed for the last-stage optical modulator ("Yes" at Step ST109). By following this sequence, the bias voltage control for the optical modulating units 2-1 to 2-N is performed in order.

As described above, once the previous-stage optical modulating unit becomes stable, the bias voltage control of the bias control unit 9 is shifted to control of the next-stage optical modulating unit. However, even when the control starts at the next stage, the previous-stage optical modulating unit is kept under continuous control. Thus, even in case the operating characteristics drift due to the changes with the passage of time or the changes in temperature, the previous-stage optical modulating unit is stably controlled to be always at the optimum operating point.

Once the bias voltages of the optical modulating units 2-1 to 2-N are controlled in the above-mentioned sequence, then, even if an operating condition such as a wavelength of the optical transmission apparatus is changed, the control can be stably performed to maintain the bias voltages at the optimum level, thereby making it possible to realize a high quality optical transmission apparatus without causing degradation of optical signals.

Meanwhile, when the optical modulating units 2-1 to 2-N are Mach-Zehnder optical modulators, there exist a plurality of optimum operating points in the Mach-Zehnder optical modulators. However, by resetting the bias voltages B-1 to B-N to the initial value, 0 V, it becomes possible to perform control so as to set such an optimum operating point for which the post-resetting bias voltage is the smallest. As a result, in bias voltage control along with the changes with the passage of time or the changes in temperature after this setting, sufficient control margin can be secured thereby enabling performing the bias voltage control in a stable manner.

As described above, in the optical transmission apparatus according to the second embodiment of the present invention, at the time of changing the wavelength of the CW light, the bias control unit 9 resets the bias voltages B-1 to B-N to be applied to the optical modulating units 2-1 to 2-N to 0 V and, after the resetting, controls the bias voltages B-1 to B-N to be applied to the optical modulating units 2-1 to 2-N in the order of letting the CW light pass in tandem. As a result, in addition to the advantages achieved according to the first embodiment of the present invention, even at the time of changing the wavelength of the CW light, the bias voltage control of the optical modulating units 2-1 to 2-N does not deviate from the optimum operating points thereby enabling achieving a high optical signal quality.

Third embodiment.

As described above, in the second embodiment of the present invention, it is assumed that an operation changeover in the optical transmission apparatus points to a change in the wavelength. Alternatively, in a third embodiment of the present invention, the explanation is given for a case where the bias voltage control for the optical modulators 2-1 to 2-N can be performed in an equivalent sequence when the bit rate is changed.

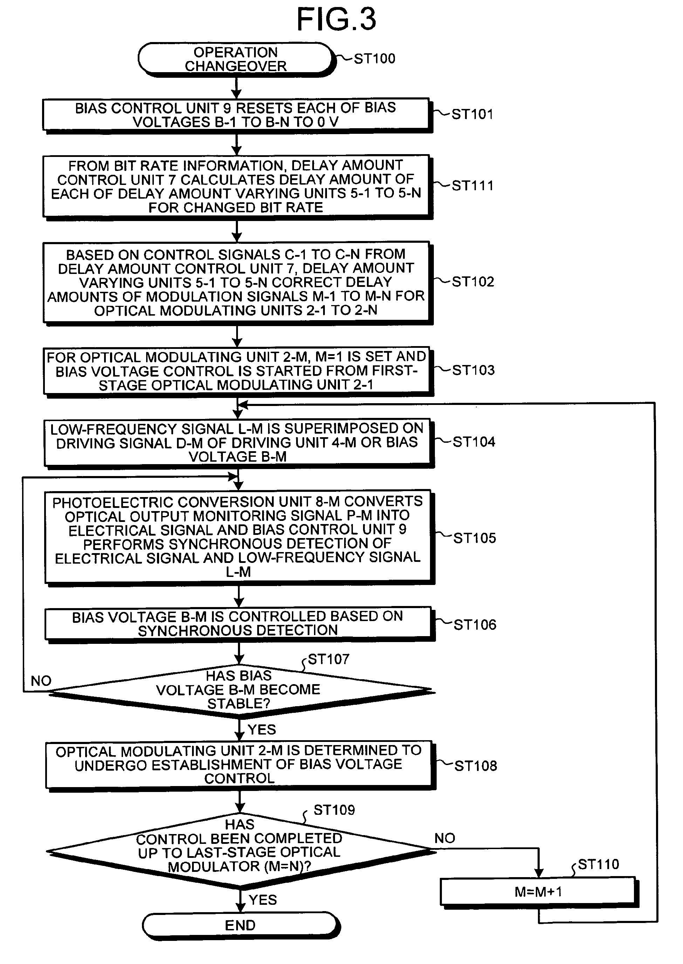

FIG. 3 is an explanatory diagram for explaining the optical transmission apparatus according to the third embodiment of the present invention, and is a flowchart for showing the sequence of the bias voltage control of the optical modulating units 2-1 to 2-N that are connected in a multistage manner in an identical configuration to the configuration of the optical transmission apparatus illustrated in FIG. 1. Meanwhile, in the drawings, the same or equivalent constituent elements are referred to by the same reference numerals. Herein, correction of the delay amounts is performed in response to a change in the bit rate of the modulation signals M-1 to M-N. For example, if the bit rate is changed from 10.3 Giga-bit/s to 9.95 Giga-bit/s, then the correction amounts for the delay amounts are obtained as the difference $\Delta\theta$ as explained in the first embodiment of the present invention.

As far as the sequence is concerned, in the event of an operation changeover for changing the bit rate (Step ST100a), the bias control unit 9 resets the bias voltages B-1 to B-N to 0 V, respectively, at first (Step ST101). Then, the delay amount control unit 7 calculates the delay amount of each of the delay amount varying units 5-1 to 5-N in response to a changed bit rate from the bit rate information (Step ST111). Subsequently, based on the control signals C-1 to C-N from the delay amount control unit 7, the delay amount varying units 5-1 to 5-N correct the delay amounts of the modulation signals M-1 to M-N for the optical modulating units 2-1 to 2-N, respectively (Step ST102). The subsequent sequence is identical to that in the second embodiment.

That is, M=1 is set for an optical modulating unit 2-M and the bias voltage control is started from the first-stage optical modulating unit 2-1 (Step ST103). Firstly, a low-frequency signal L-M (M=1) is superimposed on a driving signal D-M (M=1) of a driving unit 4-M (M=1) or on a bias voltage B-M (M=1) (Step ST104). Then, a photoelectric conversion unit 8-M (M=1) converts an optical output monitoring signal P-M (M=1) into an electrical signal and the bias control unit 9 performs synchronous detection of the electrical signal and the low-frequency signal L-M (M=1) (Step ST105). The bias voltage B-M (M=1) is controlled according to the synchronous detection (Step ST106). Subsequently, it is determined whether or not the bias voltage B-M (M=1) has become stable (Step ST107).

The voltage stability is determined, for example, on the basis of whether or not the bias voltage B-M (M=1) that is controlled by synchronous detection remains within a predetermined voltage range for a certain period of time. At the time of starting the bias voltage control, the bias voltage B-M (M=1) is reset to 0 V. If the operating optimum point of the optical modulating unit 2-M (M=1) is very far away from 0 V, then the bias voltage control causes the bias voltage B-M (M=1) to be significantly changed up to the optimum point, so that the bias voltage B-M (M=1) undergoes a large change in a short period of time. At this time, the control is not yet stable ("No" at Step ST107). Following that, the synchronous detection is continued (Step ST105), the bias voltage B-M (M=1) is controlled (Step ST106) and monitored over a certain period of time. When the bias voltage B-M (M=1) becomes stable ("Yes" at Step ST107), the first-stage optical modulating unit 2-M (M=1) is determined to undergo establishment of the bias voltage control (Step ST108).

Once the optical modulating unit 2-1 becomes stable, the focus is shifted to the control of the bias voltage B-2 of the next-stage optical modulating unit 2-2 to which the resultant stable light is inputted. That is, for example, if M=N is false and the control has not been completed up to the last-stage optical modulator ("No" at Step ST109), then M=2 is set according to calculation of M=M+1 (Step ST110) and the bias control is started for the next-stage optical modulating unit 2-M (M=2). In this way, the operations from Step ST104 to Step ST109 are repeated until M=N is true and the control is completed for the last-stage optical modulator ("Yes" at Step ST109). By following this sequence, the bias voltage control for the optical modulating units 2-1 to 2-N is performed in order.

As described above, once the previous-stage optical modulating unit becomes stable, the bias control unit 9 shifts to perform the bias voltage control of the next-stage optical modulating unit. Nevertheless, even when the control starts for the next stage, the previous-stage optical modulating unit is kept under the continued control. Thus, even in case the operating characteristics drift due to the changes with the passage of time or the changes in temperature, stable control is always made in the optimum operating point.

Once the bias voltages of the optical modulating units 2-1 to 2-N are controlled in the above-mentioned sequence, then, even when an operating condition of the optical transmission apparatus, for example even when the bit rate is changed, the control can be stably performed to maintain the bias voltages at the optimum level. That enables achieving a high quality optical transmission apparatus without degradation of the optical signals.

Meanwhile, when the optical modulating units 2-1 to 2-N are Mach-Zehnder optical modulators, there exists a plurality of optimum operating points in the Mach-Zehnder optical modulators. However, by resetting the bias voltages B-1 to B-N to the initial value, 0 V, it becomes possible to perform control so as to set such an optimum operating point for which the post-resetting bias voltage is the smallest. As a result, during the bias voltage control after the setting along with the changes with the passage of time or the changes in temperature, sufficient control margin can be secured thereby enabling performing the bias voltage control in a stable manner.

As described above, in the optical transmission apparatus according to the third embodiment of the present invention, at the time of changing the bit rate of the modulation signals M-1 to M-N, the bias control unit 9 resets the bias voltages B-1 to B-N to be applied to the optical modulating units 2-1 to 2-N to 0 V and, after the resetting, controls the bias voltages B-1 to B-N to be applied to the optical modulating units 2-1 to 2-N in the order of letting the CW light pass in tandem. As a result, in addition to the advantages equivalent to those in the first embodiment of the present invention, even at the time of changing the bit rate of the modulation signals M-1 to M-N, the bias voltage control of the optical modulating units 2-1 to 2-N does not deviate from the optimum operating points thereby enabling achieving a high optical signal quality.

Meanwhile, in the optical transmission apparatus according to the third embodiment of the invention, as an operation changeover, it is possible not only to change the bit rate of the modulation signals M-1 to M-N but also to change the wavelength of the CW light in a similar manner to the second embodiment. Besides, it goes without saying that an operation changeover is not confined to the above-mentioned cases.

Reference Signs List

2-1 to 2-N OPTICAL MODULATING UNIT
3-1 to 3-(N-1) OPTICAL FIBER
4-1 to 4-N DRIVING UNIT
5-1 to 5-N DELAY AMOUT VARYING UNIT
6-1 to 6-(N-1) TEMPERTURE MONITORING UNIT
7 DELAY AMOUT CONTROL UNIT
9 BIAS CONTROL UNIT

**Claims**

1.  An optical transmission apparatus comprising:

    a plurality of optical modulating units that modulate light on the basis of modulation signals; and
    a delay amount control unit that, based on bit rate information indicating a bit rate of the modulation signals, controls delay amounts of the modulation signals to be inputted to the plurality of optical modulating units, in such a way that the light is modulated in a synchronous manner in the plurality of optical modulating units.

2.  The optical transmission apparatus according to claim 1, wherein, based on temperature information indicating temperature of a propagation portion of the light as monitored by a temperature monitoring unit and the bit rate information, the delay amount control unit controls the delay amounts of the modulation signals to be inputted to the plurality of optical modulating units, in such a way that the light is modulated in a synchronous manner in the plurality of optical modulating units.

3.  The optical transmission apparatus according to claim 1 or 2, wherein, via delay amount varying units that assign delays to the modulation signals with delay amounts being varied and driving units that feed driving signals including the modulation signals to the plurality of optical modulating units, the delay amount control unit controls the delay amounts of the modulation signals to be inputted to the plurality of optical modulating units.

4.  The optical transmission apparatus according to any of claims 1 to 3, wherein, the plurality of optical modulating units modulate the light with letting the light pass therethrough in tandem based on the modulation signals.

5.  The optical transmission apparatus according to any one of claims 1 to 4, further comprising a bias control unit that controls bias voltages applied to the plurality of optical modulating units in such a way that the light is modulated at predetermined operating points in the plurality of optical modulating units.

6.  The optical transmission apparatus according to claim 5, wherein, at the time of an operation changeover, the bias control unit resets the bias voltages applied to the plurality of optical modulating units to an initial value and, after the resetting, controls the bias voltages applied to the plurality of optical modulating units in the order of letting the light pass in tandem.

7. The optical transmission apparatus according to claim 6, wherein, at the time of an operation changeover in the form of changing the wavelength of the light and/or the bit rate of the modulation signals, the bias control unit resets the bias voltages applied to the plurality of optical modulating units to an initial value and, after the resetting, controls the bias voltages applied to the plurality of optical modulating units in the order of letting the light pass in tandem.

8. An optical transmission method comprising:

an optical modulating step that includes modulating, by a plurality of optical modulating units, light on the basis of modulation signals; and

a delay amount control step that includes controlling, based on bit rate information indicating a bit rate of the modulation signals, delay amounts of the modulation signals to be inputted to the plurality of optical modulating units, in such a way that the light is modulated in a synchronous manner in the plurality of optical modulating units at the optical modulating step.

FIG.1

# FIG.2

```
        ┌─────────────────────────┐
        │       OPERATION         │ ~ST100
        │      CHANGEOVER         │
        └────────────┬────────────┘
                     ▼
   ┌──────────────────────────────────┐
   │ BIAS CONTROL UNIT 9 RESETS EACH  │ ~ST101
   │   OF BIAS VOLTAGES B-1 TO B-N    │
   │             TO 0 V               │
   └────────────────┬─────────────────┘
                    ▼
   ┌──────────────────────────────────┐
   │  BASED ON CONTROL SIGNALS C-1    │
   │  TO C-N FROM DELAY AMOUNT        │
   │  CONTROL UNIT 7, DELAY AMOUNT    │ ~ST102
   │  VARYING UNITS 5-1 TO 5-N        │
   │  CORRECT DELAY AMOUNTS OF        │
   │  MODULATION SIGNALS M-1 TO M-N   │
   │  FOR OPTICAL MODULATING UNITS    │
   │  2-1 TO 2-N                      │
   └────────────────┬─────────────────┘
                    ▼
   ┌──────────────────────────────────┐
   │ FOR OPTICAL MODULATING UNIT 2-M, │
   │ M=1 IS SET AND BIAS VOLTAGE      │ ~ST103
   │ CONTROL IS STARTED FROM          │
   │ FIRST-STAGE OPTICAL MODULATING   │
   │ UNIT 2-1                         │
   └────────────────┬─────────────────┘
                    ▼
   ┌──────────────────────────────────┐
   │ LOW-FREQUENCY SIGNAL L-M IS      │
   │ SUPERIMPOSED ON DRIVING SIGNAL   │ ~ST104
   │ D-M OF DRIVING UNIT 4-M OR BIAS  │
   │ VOLTAGE B-M                      │
   └────────────────┬─────────────────┘
                    ▼
   ┌──────────────────────────────────┐
   │ PHOTOELECTRIC CONVERSION UNIT    │
   │ 8-M CONVERTS OPTICAL OUTPUT      │
   │ MONITORING SIGNAL P-M INTO       │
   │ ELECTRICAL SIGNAL AND BIAS       │ ~ST105
   │ CONTROL UNIT 9 PERFORMS          │
   │ SYNCHRONOUS DETECTION OF         │
   │ ELECTRICAL SIGNAL AND            │
   │ LOW-FREQUENCY SIGNAL L-M         │
   └────────────────┬─────────────────┘
                    ▼
   ┌──────────────────────────────────┐
   │ BIAS VOLTAGE B-M IS CONTROLLED   │ ~ST106
   │ BASED ON SYNCHRONOUS DETECTION   │
   └────────────────┬─────────────────┘
                    ▼
              ST107
        ◇─────────────────◇
  NO    │  HAS BIAS        │
◄───────│  VOLTAGE B-M     │
        │  BECOME STABLE?  │
        ◇─────────────────◇
              │ YES
              ▼
   ┌──────────────────────────────────┐
   │ OPTICAL MODULATING UNIT 2-M IS   │ ~ST108
   │ DETERMINED TO UNDERGO            │
   │ ESTABLISHMENT OF BIAS VOLTAGE    │
   │ CONTROL                          │
   └────────────────┬─────────────────┘
                    ▼
              ST109
        ◇─────────────────◇        NO    ┌─────────────┐
        │ HAS CONTROL BEEN │─────────────►│  M=M+1      │ ~ST110
        │ COMPLETED UP TO  │              └─────────────┘
        │ LAST-STAGE       │
        │ OPTICAL          │
        │ MODULATOR (M=N)? │
        ◇─────────────────◇
              │ YES
              ▼
        ┌──────────┐
        │   END    │
        └──────────┘
```

# FIG.3

OPERATION
CHANGEOVER ——ST100

↓

BIAS CONTROL UNIT 9 RESETS EACH OF BIAS
VOLTAGES B-1 TO B-N TO 0 V ——ST101

↓

FROM BIT RATE INFORMATION, DELAY AMOUNT
CONTROL UNIT 7 CALCULATES DELAY AMOUNT OF
EACH OF DELAY AMOUNT VARYING UNITS 5-1 TO 5-N
FOR CHANGED BIT RATE ——ST111

↓

BASED ON CONTROL SIGNALS C-1 TO C-N FROM
DELAY AMOUNT CONTROL UNIT 7, DELAY AMOUNT
VARYING UNITS 5-1 TO 5-N CORRECT DELAY
AMOUNTS OF MODULATION SIGNALS M-1 TO M-N FOR
OPTICAL MODULATING UNITS 2-1 TO 2-N ——ST102

↓

FOR OPTICAL MODULATING UNIT 2-M, M=1 IS SET AND
BIAS VOLTAGE CONTROL IS STARTED FROM FIRST-
STAGE OPTICAL MODULATING UNIT 2-1 ——ST103

↓

LOW-FREQUENCY SIGNAL L-M IS SUPERIMPOSED ON
DRIVING SIGNAL D-M OF DRIVING UNIT 4-M OR BIAS
VOLTAGE B-M ——ST104

↓

PHOTOELECTRIC CONVERSION UNIT 8-M CONVERTS
OPTICAL OUTPUT MONITORING SIGNAL P-M INTO
ELECTRICAL SIGNAL AND BIAS CONTROL UNIT 9
PERFORMS SYNCHRONOUS DETECTION OF
ELECTRICAL SIGNAL AND LOW-FREQUENCY SIGNAL
L-M ——ST105

↓

BIAS VOLTAGE B-M IS CONTROLLED BASED ON
SYNCHRONOUS DETECTION ——ST106

↓

ST107
HAS BIAS
VOLTAGE B-M BECOME          NO
STABLE?

↓ YES

OPTICAL MODULATING UNIT 2-M IS DETERMINED TO
UNDERGO ESTABLISHMENT OF BIAS VOLTAGE
CONTROL ——ST108

↓

ST109
HAS
CONTROL BEEN COMPLETED          NO
UP TO LAST-STAGE OPTICAL
MODULATOR (M=N)?          ST110

↓ YES          M=M+1

END

<div align="center">

**INTERNATIONAL SEARCH REPORT**

</div>

| | International application No. |
|---|---|
| | PCT/JP2010/053804 |

**A. CLASSIFICATION OF SUBJECT MATTER**
*H04B10/04*(2006.01)i, *G02F1/03*(2006.01)i, *H04B10/02*(2006.01)i, *H04B10/06* (2006.01)i, *H04B10/14*(2006.01)i, *H04B10/142*(2006.01)i, *H04B10/152* (2006.01)i, *H04B10/18*(2006.01)i, *H04B10/26*(2006.01)i, *H04B10/28*(2006.01)i
According to International Patent Classification (IPC) or to both national classification and IPC

**B. FIELDS SEARCHED**

Minimum documentation searched (classification system followed by classification symbols)
H04B10/04, G02F1/03, H04B10/02, H04B10/06, H04B10/14, H04B10/142, H04B10/152, H04B10/18, H04B10/26, H04B10/28

Documentation searched other than minimum documentation to the extent that such documents are included in the fields searched
Jitsuyo Shinan Koho          1922–1996     Jitsuyo Shinan Toroku Koho     1996–2010
Kokai Jitsuyo Shinan Koho    1971–2010     Toroku Jitsuyo Shinan Koho     1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2009-27517 A  (NTT Electronics Corp.),<br>05 February 2009 (05.02.2009),<br>paragraphs [0004] to [0006]; fig. 18<br>(Family: none) | 1,3,4,8<br>2,5-7 |
| Y | JP 2007-158415 A (Fujitsu Ltd.),<br>21 June 2007 (21.06.2007),<br>paragraphs [0032] to [0037]; fig. 1<br>& US 2007/0212079 A1    & EP 1895690 A1 | 2 |
| Y | JP 2003-233047 A (Fujitsu Ltd.),<br>22 August 2003 (22.08.2003),<br>paragraphs [0048] to [0049], [0061] to [0063];<br>fig. 11<br>& US 2003/0147591 A1 | 5-7 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>11 May, 2010 (11.05.10) | Date of mailing of the international search report<br>18 May, 2010 (18.05.10) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007158415 A